# EUROPEAN PATENT APPLICATION

(11) **EP 4 621 743 A1**
(43) Date of publication of application: **24.09.2025**
(21) Application number: 25161772.6
(22) Date of filing: 05.03.2025
(51) Int. Cl.: G07C 9/00, G07C 9/28

(54) **METHOD AND SYSTEM FOR CONTROLLING BUILDING ACCESS USING A MOBILE DEVICE**

(30) Priority: 07.03.2024 US 202418598880
(71) Applicant: Honeywell International Inc., Charlotte, NC 28202 (US)
(72) Inventor: PANDIYAN, S.B. Saravana, Charlotte, 28202 (US); SIVARAM, Vikramraj, Charlotte, 28202 (US); V, Thiruppathi, Charlotte, 28202 (US); MENON, Chithira P S, Charlotte, 28202 (US); SADHASIVAM, Prithivirajan, Charlotte, 28202 (US)
(74) Representative: Haseltine Lake Kempner LLP

(57) **Abstract**

A mobile device is used as an access control device to gain access to a secure area of a facility. One or more wireless access points receives and an International Mobile Equipment Identity (IMEI)-based identifier that is unique to the user's mobile device, and identifies a currently location of the user's mobile device. The door is electrically unlocked when the current location of the user's mobile device is determined to be within a predetermined proximity to the door and the received IMEI based identifier of the user's mobile device is associated with a user that has access rights to access through the door. Various techniques are employed to detect possible tailgating events.

## Description

### TECHNICAL FIELD

The present disclosure pertains generally to methods of controlling access to a controlled space and more particularly to methods and systems for using mobile devices in controlling access to a controlled space while detecting tailgating events.

### BACKGROUND

Physical access control systems are designed to provide access to buildings and/or specific areas of a building for individuals who are authorized to access such areas and to deny access to buildings and/or specific areas of the building to individuals who are not authorized to access such areas. For example, certain individuals may be authorized to access a secure area of a building, whereas other individuals may not be allowed to access the secure area. In another example, certain individuals may be authorized to access a first building but not a second building, whereas other individuals may not be allowed to access either building. In some cases, access may be granted only during certain times.

Current approaches to physical access control systems often rely on users (e.g., employees) carrying physical access cards (e.g., physical badge) to gain entry to areas of a building. For example, a user can swipe a physical access card at an access card reader adjacent to a security door to gain entry to an area of a building. However, issuing and managing physical access card can be time consuming, cumbersome and error prone. What would be desirable is a system which allows a user's mobile device to act as an access credential for building access systems while the system is able to detect tailgating events.

### SUMMARY

The present disclosure pertains generally to methods of controlling access to a controlled space and more particularly to methods and systems for using mobile devices in controlling access to a controlled space while detecting tailgating events. An example may be found in a method of controlling access through a door of a facility having a door lock that can be electrically locked and unlocked to control access to a secure area. The illustrative method includes establishing a wireless communication between one or more wireless access points and each of a plurality of mobile devices, wherein each of the plurality of mobile devices is associated with a particular user. One or more of the wireless access points wirelessly receive from each of the plurality of mobile devices a respective International Mobile Equipment Identity (IMEI) based identifier that is unique to the respective mobile device and operates as a user credential for the particular user that is associated with the respective mobile device. One or more of the wireless access points wirelessly identify a current location of each of the plurality of mobile devices. A determination is made as to when the current location of a first one of the plurality of mobile devices is outside of the secure area and within a predetermined proximity to the door and when the particular user of the first one of the plurality of mobile devices has access rights to gain access through the door. The door is electrically unlocked when the current location of the first one of the plurality of the mobile devices is within the predetermined proximity to the door and the particular user that is associated with the first one of the plurality of mobile devices has access rights to gain access through the door. In some cases, no third party application needs to be downloaded to the mobile device. A determination is made as to whether the particular user of a second one of the plurality of mobile devices does not have access rights to gain access through the door. A determination is made that the particular user of the second one of the plurality of mobile devices, which does not have access rights through the door, has improperly gained access through the door as a tailgater when the current location of the second one of the plurality of mobile devices is found to be within the secure area. A tailgater alarm is issued when the particular user of the second one of the plurality of mobile devices is determined to have improperly gained access through the door as a tailgater.

Another example may be found in a method of controlling access through a door of a facility having a door lock that can be electrically locked and unlocked to control access to a secure area. The illustrative method includes establishing a wireless communication between one or more wireless access points and a mobile device, wherein the mobile device is associated with a user. One or more of the wireless access points wirelessly receive from the mobile device an International Mobile Equipment Identity (IMEI) based identifier that is unique to the mobile device and operates as a user credential for the user that is associated with the mobile device. One or more of the wireless access points wirelessly identify a current location of mobile device. A determination is made as to when the current location of the mobile device is within a predetermined proximity to the door and when the user associated with the mobile that has the received IMEI-based identifier has access rights to gain access through the door. The door is electrically unlocked when the current location of the mobile device is within the predetermined proximity to the door and the user associated with the mobile device that has the received IMEI-based identifier has access rights to gain access through the door. The method includes monitoring how many people pass through the door while the door was electrically unlocked to allow the user associated with the mobile device that has the received IMEI-based identifier access through the door. A tailgater alarm is issued when more than one person passed through the door while the door was electrically unlocked to allow the user associated with the mobile device that has the received IMEI-based identifier access through the door.

Another example may be found in a method of controlling access through a door of a facility having a door lock that can be electrically locked and unlocked to control access to a secure area. The illustrative method includes establishing a wireless communication between one or more wireless access points and a mobile device, wherein the mobile device is associated with a user. One or more of the wireless access points wirelessly receive from the mobile device an International Mobile Equipment Identity (IMEI) based identifier that is unique to the mobile device and operates as a user credential for the user that is associated with the mobile device. One or more of the wireless access points identify a current location of mobile device. A determination is made as to when the current location of the mobile device is outside of the secure area and within a predetermined proximity to the door and when the user associated with the mobile device that has the received IMEI-based identifier has access rights to gain access through the door. The door is electrically unlocked when the current location of the mobile device is within the predetermined proximity to the door and the user associated with the mobile device that has the received IMEI-based identifier has access rights to gain access through the door. The method includes determining when the current location of the mobile device is found to be within the secure area without the door first being electrically unlocked to allow the user of the mobile device to gain access through the door and issuing a tailgater alarm when the current location of the mobile device is found to be within the secure area without the door first being electrically unlocked to allow the user of the mobile device to gain access through the door.

The preceding summary is provided to facilitate an understanding of some of the features of the present disclosure and is not intended to be a full description. A full appreciation of the disclosure can be gained by taking the entire specification, claims, drawings, and abstract as a whole.

### BRIEF DESCRIPTION OF THE DRAWINGS

The disclosure may be more completely understood in consideration of the following detailed description of various embodiments in connection with the accompanying drawings, in which:
Figure 1 is a schematic block diagram showing an illustrative access control system;
Figure 2 is a schematic block diagram showing an illustrative scheme to detect an unauthorized individual with a mobile device that is attempting to access a secure space as a tailgater;
Figure 3 is a schematic block diagram showing an illustrative scheme utilizing an ultrasonic sensor to detect an unauthorized individual without an active mobile device that is attempting to access a secure space as a tailgater;
Figure 4 is a schematic block diagram showing an illustrative scheme utilizing a video system to detect an unauthorized individual without an active mobile device that is attempting to access a secure space as a tailgater;
Figures 5A and 5B are flow diagrams that together show an illustrative method of controlling access to a secure space;
Figures 6A and 6B are flow diagrams that together show an illustrative method of controlling access to a secure space; and
Figures 7A, 7B and 7C are flow diagrams that together show an illustrative method of controlling access to a secure space.

While the disclosure is amenable to various modifications and alternative forms, specifics thereof have been shown by way of example in the drawings and will be described in detail. It should be understood, however, that the intention is not to limit aspects of the disclosure to the particular embodiments described. On the contrary, the intention is to cover all modifications, equivalents, and alternatives falling within the spirit and scope of the disclosure.

### DESCRIPTION

For the following defined terms, these definitions shall be applied, unless a different definition is given in the claims or elsewhere in this specification.

All numeric values are herein assumed to be modified by the term "about", whether or not explicitly indicated. The term "about" generally refers to a range of numbers that one of skill in the art would consider equivalent to the recited value (i.e., having the same function or result). In many instances, the term "about" may be indicative as including numbers that are rounded to the nearest significant figure.

The recitation of numerical ranges by endpoints includes all numbers within that range (e.g., 1 to 5 includes 1, 1.5, 2, 2.75, 3, 3.80, 4, and 5).

Although some suitable dimensions ranges and/or values pertaining to various components, features and/or specifications are disclosed, one of skill in the art, incited by the present disclosure, would understand desired dimensions, ranges and/or values may deviate from those expressly disclosed.

As used in this specification and the appended claims, the singular forms "a", "an", and "the" include plural referents unless the content clearly dictates otherwise. As used in this specification and the appended claims, the term "or" is generally employed in its sense including "and/or" unless the content clearly dictates otherwise.

The following description should be read with reference to the drawings in which similar elements in different drawings are numbered the same. The drawings show by way of illustration how one or more embodiments of the disclosure may be practiced. The illustrative embodiments depicted are intended only as exemplary. Selected features of any illustrative embodiment may be incorporated into an additional embodiment unless clearly stated to the contrary.

User interaction with a door access control system can be streamlined using capabilities offered by mobile devices. For example, in some embodiments, a location service of a mobile device may determine a current location of the mobile device. The location service may use, for example, global positioning system (GPS) signals, cellular signals, Ultra-Wide-Band (UWB) signals, WiFi signals, Bluetooth signals, and/or other signals to determine the currently location of the mobile device. In another example, a communication service of the mobile device may be used to communicate with one or more remote devices, and to pass information between the mobile device and one or more remote devices. The one or more remote devices may determine the location of the mobile device, such as through triangularization. When so provided, rather than physically presenting a card (or other device) to an access card reader to gain access to an area or facility, the user carrying their mobile device may simply move within a particular distance of a door and be automatically granted access through the door. That is, rather than using "card readers", embodiments of the present disclosure allow a user's mobile device to perform the function of an access card, sometimes without requiring the download of a corresponding access control application from an application store. For example, the operating system of the mobile device itself may transmit a unique identifier of the mobile device and the location of the mobile device and/or one or more signals that can be used to determine the current location of the mobile device, and based on the current location of the mobile device and the unique identifier of the mobile device, a decision is made as to whether to unlock the door to allow access to the secure space.

It is contemplated that embodiments of the present disclosure may be utilized with a variety of access systems. In some cases, embodiments of the present disclosure may be used with or in place of systems with door access card readers (those with and/or without Bluetooth^{®} capabilities). Alternatively, or additionally, embodiments of the present disclosure may be used with systems that only include an actuatable lock mechanism (e.g., no card readers present).

The present disclosure is generally directed towards methods and systems for allowing secure access to one or more access points (e.g. door, gate, corridor, etc.) using a mobile device. It is contemplated that the system may allow a user to access two different buildings having two different access control providers using the same mobile device. In some cases, the buildings may belong to the same entity (e.g., company and/or corporation) or the buildings may belong to different entities. Generally, access points may be tagged with a geographic location (e.g., latitude, longitude, and/or altitude) and a door name. These access points may be selectively made available to users via the user's mobile device. Actuation of an unlock button on the mobile device may result in the unlocking of the door. In some cases, the door may unlock automatically when the mobile device is in proximity to the door, and in some cases the mobile device is moved in a predetermined way adjacent the door (i.e. turns toward the door), without requiring the user to activate an unlock button or the like via the user interface of the mobile device.

Embodiments of the present disclosure can reduce the need to issue a physical badge for every location or facility that a person (e.g., an employee, a contractor, a repair person, etc.) needs to access. In some cases, embodiments of the present disclosure can be retrofit to existing access control systems with and/or without smart reader systems without having to add additional hardware. Further, embodiments of the present disclosure may streamline or facilitate access requests for access to facilities and/or locations. Embodiments of the present disclosure may allow access via a user's mobile device while being able to detect tailgating events, in which a first person is authorized to pass through a door, and one or more additional people pass through the temporarily unlocked door even though they are not authorized to do so.

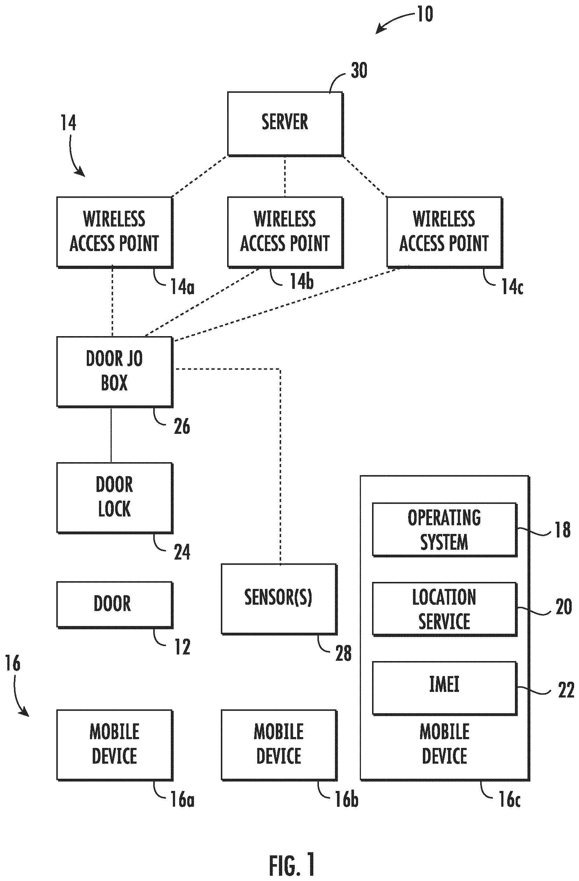

Figure 1 is a schematic block diagram showing an illustrative access control system 10 for controlling access through a door 12 of a facility. In some instances, the access control system 10 may be used to control access through a large number of different doors within the facility, but only one door 12 is shown here for simplicity. A door is used as an example of an access control point, and it is contemplated that the word "door" may be interpreted to include any access control barrier such as a traditional door, a gate, a turnstile and/or any other suitable access control barrier. The illustrative access control system 10 includes a number of wireless access points 14 individually labeled as 14a, 14b and 14c. While a total of three wireless access points 14 are shown, it will be appreciated that the access control system 10 may have any number of wireless access points 14. In some instances, the wireless access points 14 may include one or more beacons. In some instances, the wireless access points 14 may include one or more wireless 5G millimeter-wave access points (e.g. wireless 5G millimeter-wave router or a 5G cellular tower) or one or more UWB access points (e.g. wireless UWB routers).

The access control system 10 interacts with a number of mobile devices 16, individually labeled as 16a, 16b and 16c. The access control system 10 may interact with any number of mobile devices 16. In some instance, each individual within the facility may carry a mobile device 16. The mobile devices 16 may be, for example, mobile phones, tablet computers, laptop computers, dedicated access control devices and/or any other suitable mobile devices. The mobile devices 16 may be considered as being part of the access control system 10. Each mobile device 16 may include, as shown as part of the mobile device 16c, an operating system 18 that runs all of the processes running on the mobile device 16c, a location service 20 that allows the mobile device 16c to ascertain its own current location, and an IMEI-based identifier 22 that is unique to that particular mobile device 16c.

In some instances, the IMEI-based identifier 22 is actually the IMEI number for that mobile device 16. In some cases, the IMEI-based identifier 22 may be derived from the IMEI number of the mobile device. For example, in some cases, the IMEI number of the user's mobile device may be hashed with a sim card serial number of the user's mobile device to derive the IMEI-based identifier 22. In some cases, the hashed value may be encrypted to derive the IMEI-based identifier 22. These are just examples. In any event, the IMEI-based identifier 22 operates as a user credential for the access control system. In some instances, the operating system 18 of the mobile device 16 may be configured to wirelessly send a determined current location of the mobile device 16 and/or one or more signals that can be used to determine the current location of the mobile device, along with the IMEI-based identifier 22 that is unique to the mobile device 16, without first being prompted by an application program running on the mobile device 16. That is, in some cases, the operating system (OS) of the mobile device itself may transmit the unique identifier of the mobile device and the location of the mobile device and/or one or more signals that can be used to determine the current location of the mobile device.

In some instances, the operating system 18 of the mobile device 16 may only transmit the current location of the mobile device 16 (and/or the one or more signals that can be used to determine the current location of the mobile device) and the IMEI-based identifier 22 when the user is currently signed in to the mobile device 16, or after the user has unlocked the mobile device 16. Unlocking the mobile device 16 may entail entering a pin, or using bio-information such as face recognition or a thumbprint, for example. In some instances, the user may be required to unlock their mobile device 16 each time the user desires entry through a locked door. In some instances, the operating system 18 of the mobile device 16 may transmit the current location of the user's mobile device 16 (and/or one or more signals that can be used to determine the current location of the mobile device) and the IMEI-based identifier 22 regardless of whether the user's mobile device 16 has been signed into or otherwise unlocked.

In some instances, the mobile device 16 is configured to establish wireless communication with one or more of the wireless access points 14. The one or more wireless access points 14 may identify a current location of the mobile device 16 based at least in part on one or more characteristics of one or more signals received by the one or more of the wireless access points 14. The one or more signals transmitted by the mobile device 16 and received by the one or more of the wireless access points 14 may include, for example, cellular signals, Ultra-Wide-Band (UWB) signals, WiFi signals, Bluetooth signals, and/or other signals, to help in determining the current location of the user's mobile device. In some cases, a location service of the operating system 18 of the mobile device 16 may determine the current location of the user's mobile device, and send the current location of the mobile device to the one or more of the wireless access points 14. The location service of the mobile device 16 may use, for example, global positioning system (GPS) signals, cellular signals, Ultra-Wide-Band (UWB) signals, WiFi signals, Bluetooth signals, and/or other signals to determine the currently location of the mobile device 16.

The access control system 10 includes a door lock 24 that is configured to lock and unlock the door 12 of the facility. In some cases, the door lock 24 may be configured to be locked and unlocked electronically. As shown, the access control system 10 includes a door IO box 26 that is coupled with the door lock 24. In some instances, the door IO box 26 provides a wired or wireless connection between the door lock 24 and the rest of the access control system 10. In some cases, the door lock 24 itself is able to communicate wirelessly. In such cases, the door IO box 26 may be excluded. In some instances, the functionality of the door IO box 26 may also be built into the door lock 24.

In some instances, the access control system 10 may include one or more sensors 28. In some cases, the one or more sensors 28 may be used by the access control system 10 to detect possible occurrences of tailgating, which is when one or more unauthorized people slip through an unlocked door with or behind an authorized person. The one or more sensors 28 may be deployed by each of a number of different doors 12 within the facility. If one person was authorized to pass through the door 12 into a hallway, for example, and a total of three people are detected by the one or more sensors 28 immediately after the door 12 was unlocked, this may be an indication of tailgating. The one or more sensors 28 may include ultrasonic or radar-based sensors that are able to detect how many people are in a particular space. In some cases, the one or more sensors 28 may include a beam-break sensor. In some cases, the one or more sensors 28 may include a video system that is able to capture a video stream and then utilize various video analytics algorithms to determine how many people have passed through the door while the door was unlocked. In some cases, the video analytics algorithms may include facial recognition algorithms that may be used to identify the person or persons suspected of tailgating. In some cases, the wireless access points 14 may be in communication with a server 30. The server 30 may be a local server or a remote or cloud-based server. In some cases, the server 30 may be used to help identify, track and monitor possible tailgating events.

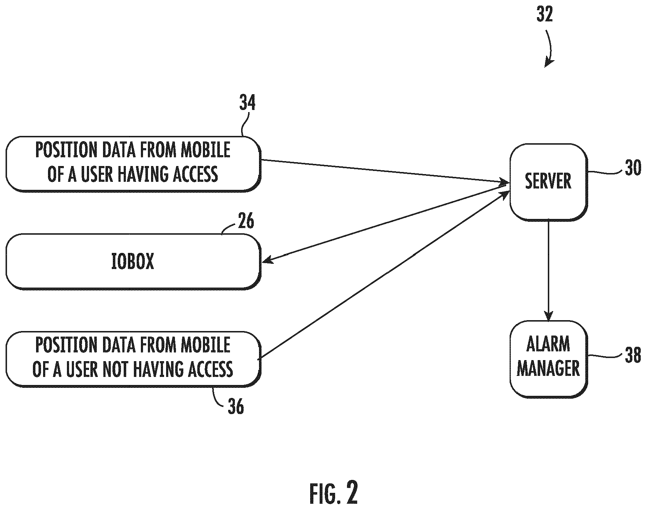

Figure 2 is a schematic block diagram showing an illustrative scheme 32 for detecting possible tailgating when both an authorized person and an unauthorized individual has a mobile device 16. The server 30 (and/or in some cases one or more of the wireless access points 14) receives a unique identifier and position data from a mobile device 16 of an authorized person, as indicated at block 34. In some cases, the unique identifier may include the IMEI-based identifier 22 from the authorized person's mobile device 16, and the position data may include a current location of the authorized person's mobile device 16. In response, and when the current position of the authorized person's mobile device 16 is near the door 12, the server 30 (and/or in some cases one or more of the wireless access points 14) instructs the door IO box 26 to unlock the door lock 24 and allow the authorized person to pass through the door 12.

In the example show, the server 30 (and/or in some cases one or more of the wireless access points 14) also receives a unique identifier and position data from an unauthorized person having a mobile device 16, as indicated at block 36. In some cases, the unique identifier may include the IMEI-based identifier 22 from the unauthorized person's mobile device 16, and the position data may include a current location of the unauthorized person's mobile device 16. When it is determined that the current location of the unauthorized person's mobile device 16 has passed from outside of the secure area to inside of the secure area during the time that the door was unlocked to allow the authorized user access to the secure area, the server 30 sends a tailgater alert to the Alarm Manager 38. The Alarm Manager 38 issues a tailgater alarm indicating that the unauthorized person has improperly gained access through the door as a tailgater. The Alarm Manager 38 may be part of a security system, for example.

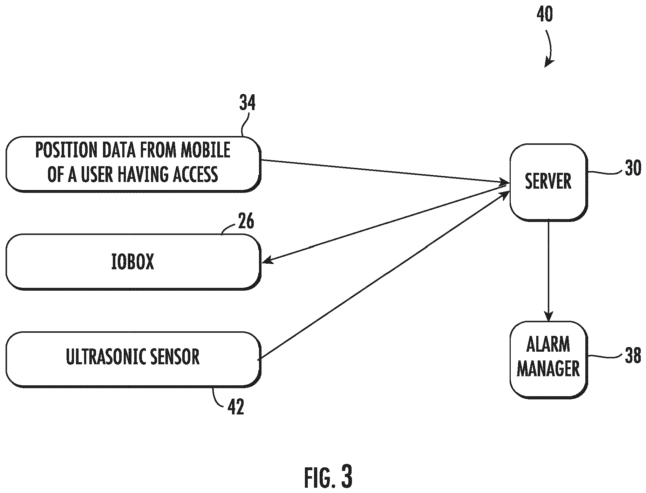

Figure 3 is a schematic block diagram showing an illustrative scheme 40 for detecting possible tailgating when an authorized person has a mobile device 16 while an unauthorized person does not (or the mobile device 16 of the unauthorized person is inactive such as being turned off). The server 30 (and/or in some cases one or more of the wireless access points 14) receives a unique identifier and position data from a mobile device 16 of an authorized person, as indicated at block 34. In some cases, the unique identifier may include the IMEI-based identifier 22 from the authorized person's mobile device 16, and the position data may include a current location of the authorized person's mobile device 16. In response, and when the current position of the authorized person's mobile device 16 is near the door 12, the server 30 (and/or in some cases one or more of the wireless access points 14) instructs the door IO box 26 to unlock the door lock 24 and allow the authorized person to pass through the door 12. In this example, an ultrasonic sensor 42 sends multiple interferences to the server 30 (and/or in some cases one or more of the wireless access points 14), instead of just one. Each inference corresponds to the detection of one person passing through the door during the time that the door was unlocked to allow the authorized user access to the secure area. This means that more than one person was found passing through the door 12, instead of just the expected one authorized person. In response, the server 30 sends a tailgater alert to the Alarm Manager 38. The Alarm Manager 38 issues a tailgater alarm indicating that one or more unauthorized persons have improperly gained access through the door as a tailgater.

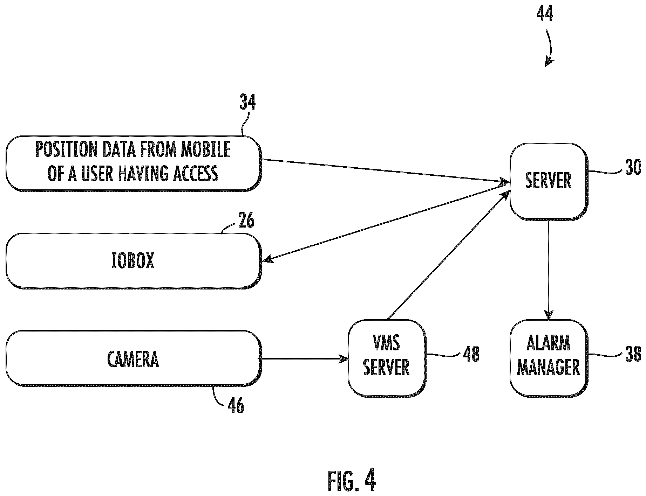

Figure 4 is a schematic block diagram showing an illustrative scheme 44 for detecting possible tailgating when an authorized person has a mobile device 16 while an unauthorized person does not (or the mobile device 16 of the unauthorized person is inactive such as being turned off). The server 30 (and/or in some cases one or more of the wireless access points 14) receives a unique identifier and position data from a mobile device 16 of an authorized person, as indicated at block 34. In some cases, the unique identifier may include the IMEI-based identifier 22 from the authorized person's mobile device 16, and the position data may include a current location of the authorized person's mobile device 16. In response, and when the current position of the authorized person's mobile device 16 is near the door 12, the server 30 (and/or in some cases one or more of the wireless access points 14) instructs the door IO box 26 to unlock the door lock 24 and allow the authorized person to pass through the door 12. In this example, a camera 46 captures one or more images of the space around the door 12, or perhaps the space just upstream or downstream of the door 12, and provides the one or more images to a VMS (video management system) server 48. The VMS server 48 utilizes video analytics algorithms to count the number of people found passing through the door 12 during the time that the door 12 was unlocked to allow the authorized user access to the secure area, and reports the count to the server 30. The server 30 detects a mismatch between the number of people authorized to pass through the door 12 and a total number of people who did pass, and when there is a mismatch, sends a tailgater alert to the Alarm Manager 38. The Alarm Manager 38 issues a tailgater alarm indicating that one or more unauthorized persons have improperly gained access through the door as a tailgater. In some cases, the video analytics algorithms may include facial recognition algorithms that may be used to identify and report the identity of the person or persons suspected of tailgating.

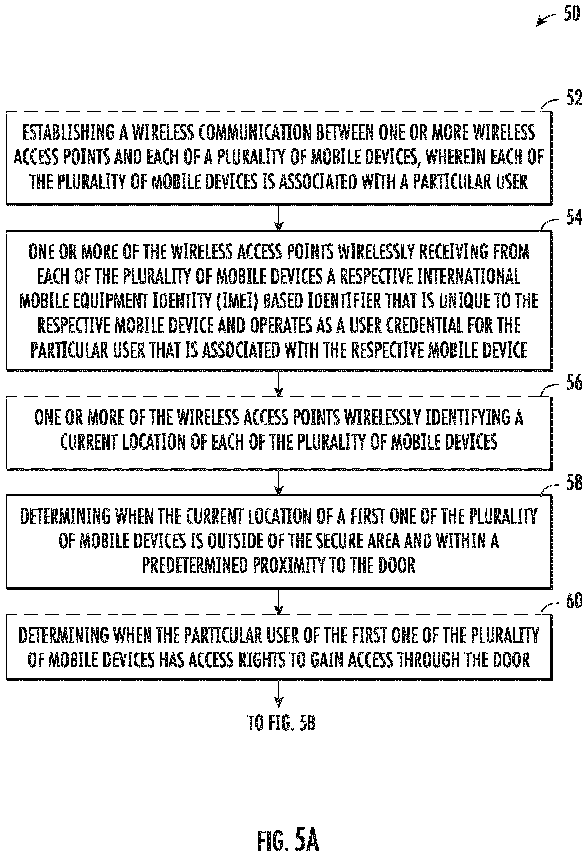

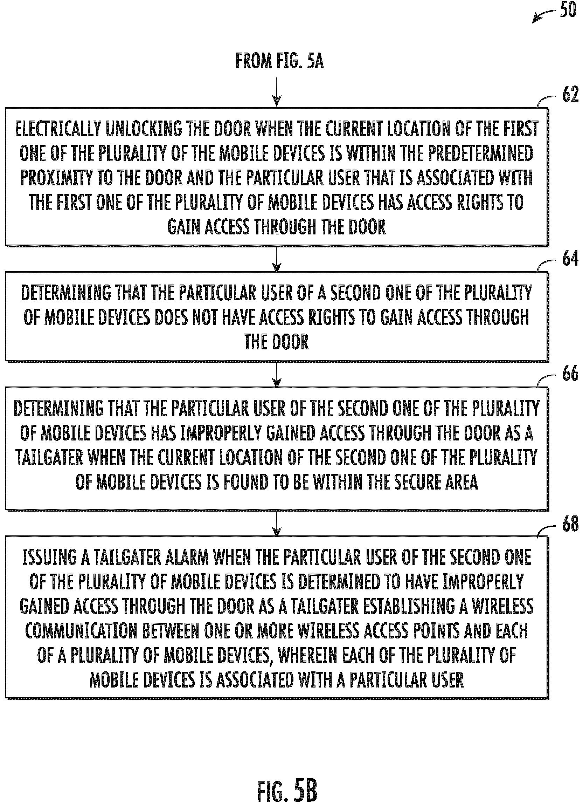

Figures 5A and 5B are flow diagrams that together show an illustrative method 50 of controlling access through a door (such as the door 12) of a facility having a door lock (such as the door lock 24) that can be electrically locked and unlocked to control access to a secure area. The illustrative method 50 includes establishing a wireless communication between one or more wireless access points (such as the wireless access points 14) and each of a plurality of mobile devices (such as the mobile devices 16), wherein each of the plurality of mobile devices is associated with a particular user, as indicated at block 52. In some cases, the wireless access points may include one or more 5G millimeter-wave access points, and the wireless communication between the one or more wireless access points and each of the plurality of mobile devices may include sending and receiving one or more 5G millimeter-wave signals. In some cases, each of the one or more wireless access points may include an Ultra-Wide Band (UWB) access point, and the wireless communication between the one or more wireless access points and each of the plurality of mobile devices may include sending and receiving one or more Ultra-Wide Band (UWB) signals. In some cases, the wireless access points may include one or more 4G access points, and the wireless communication between the one or more wireless access points and each of the plurality of mobile devices may include sending and receiving one or more 4G signals. In some cases, the wireless access points may include one or more WiFi access points, and the wireless communication between the one or more wireless access points and each of the plurality of mobile devices may include sending and receiving one or more WiFi signals. In some cases, the wireless access points may include one or more Bluetooth access points, and the wireless communication between the one or more wireless access points and each of the plurality of mobile devices may include sending and receiving one or more Bluetooth signals. These are just examples.

In this example, one or more of the wireless access points wirelessly receive from each of the plurality of mobile devices a respective International Mobile Equipment Identity (IMEI) based identifier that is unique to the respective mobile device and operates as a user credential for the particular user that is associated with the respective mobile device, as indicated at block 54. One or more of the wireless access points wirelessly identify a current location of each of the plurality of mobile devices, as indicated at block 56. In some cases, each of the plurality of mobile devices determined its own current location via a location service of the respective mobile device and then sends their current location to one or more of the one or more wireless access points. In some cases, the current location of each of the mobile devices may be determined by receiving at one or more wireless communication signals from each of the plurality of mobile devices, and then one or more of the wireless access points identify the current location of each of the plurality of mobile device based at least in part on one or more characteristics of the wireless communication signals received from each of the plurality of mobile devices. In some cases, two or more of the wireless access points wirelessly receive wireless communication signals from each of the plurality of mobile devices, and one or more of the wireless access points identify the current location of each of the plurality of mobile device based on a triangularization using the wireless communication signals that are wirelessly received by two or more of the wireless access points from each of the plurality of mobile devices.

A determination is made as to when the current location of a first one of the plurality of mobile devices is outside of the secure area and within a predetermined proximity to the door, as indicated at block 58. A determination is made as to when the particular user of the first one of the plurality of mobile devices has access rights to gain access through the door, as indicated at block 60. Continuing on Figure 5B, the method 50 includes electrically unlocking the door when the current location of the first one of the plurality of the mobile devices is within the predetermined proximity to the door and the particular user that is associated with the first one of the plurality of mobile devices has access rights to gain access through the door, as indicated at block 62. A determination is made that the particular user of a second one of the plurality of mobile devices does not have access rights to gain access through the door, as indicated at block 64. A determination is made that the particular user of the second one of the plurality of mobile devices has improperly gained access through the door as a tailgater when the current location of the second one of the plurality of mobile devices is found to be within the secure area, as indicated at block 66. A tailgater alarm is issued when the particular user of the second one of the plurality of mobile devices is determined to have improperly gained access through the door as a tailgater, as indicated at block 68.

In some instances, each of the plurality of mobile devices includes an operating system (OS), wherein the OS of each of the plurality of mobile devices may be configured to wirelessly send the IMEI-based identifier of the respective mobile device to one or more of the wireless access points without first being prompted by a third-party application program that has been downloaded by a user to the respective mobile device. In some cases, the OS of each of the plurality of mobile devices may be configured to identify the current location of the respective mobile device and to wirelessly send the current location of the respective mobile device to one or more of the wireless access points without first being prompted by a third-party application program that has been downloaded by a user to the respective mobile device. In some cases, each of the plurality of mobile devices may hash an IMEI number of the respective mobile device with a sim card serial number of the respective mobile device to form the IMEI-based identifier. In some cases, each of the plurality of mobile devices may hash an IMEI number of the respective mobile device with a sim card serial number of the respective mobile device to arrive at a hashed value, and may encrypt the hashed value to form the IMEI-based identifier.

In some cases, one or more of the wireless access points and/or one or more servers (such as the server 30) operatively coupled to the one or more wireless access points is/are configured to determine when the current location of the first one of the plurality of mobile devices is outside of the secure area and within a predetermined proximity to the door and to determine when the particular user of the first one of the plurality of mobile devices has access rights to gain access through the door. One or more of the wireless access points and/or one or more servers (such as the server 30) operatively coupled to the one or more wireless access points may be configured to electrically unlock the door when the current location of the first one of the plurality of the mobile devices is within the predetermined proximity to the door and the particular user that is associated with the first one of the plurality of mobile devices has access rights to gain access through the door. One or more of the wireless access points and/or one or more servers (such as the server 30) operatively coupled to the one or more wireless access points may be configured to determine that the particular user of the second one of the plurality of mobile devices does not have access rights to gain access through the door, determine that the particular user of the second one of the plurality of mobile devices has improperly gained access through the door as a tailgater when the current location of the second one of the plurality of mobile devices is found to be within the secure area, and to issue the tailgater alarm when the particular user of the second one of the plurality of mobile devices is determined to have improperly gained access through the door as a tailgater.

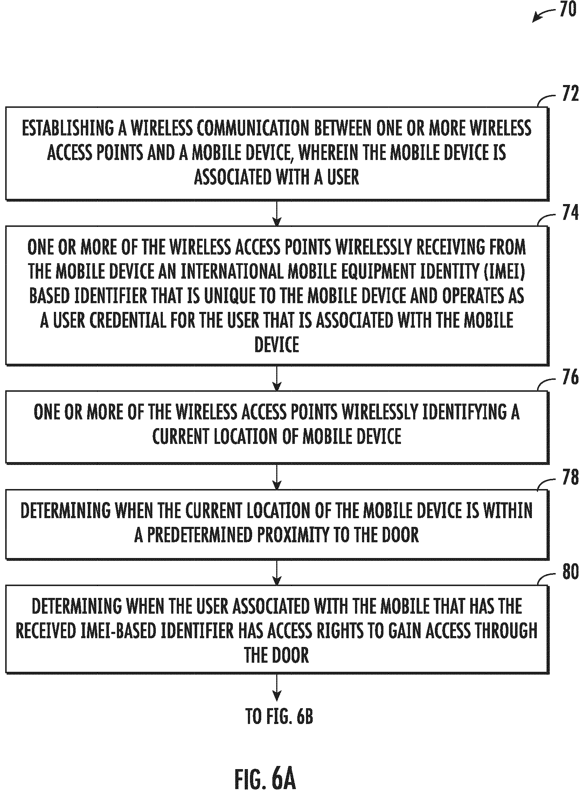

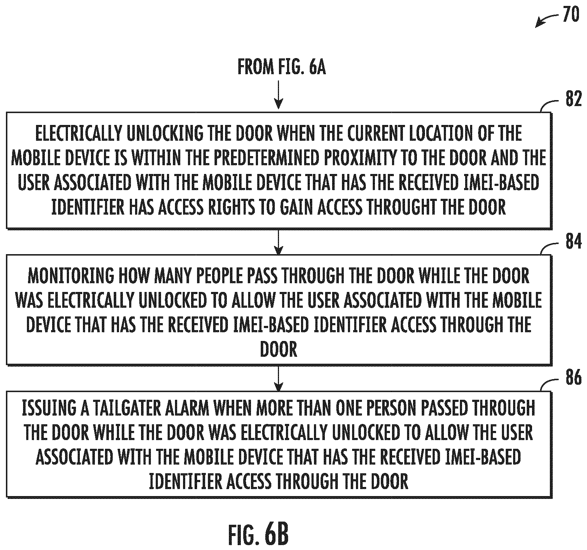

Figures 6A and 6B are flow diagrams that together show an illustrative method 70 of controlling access through a door (such as the door 12) of a facility having a door lock (such as the door lock 24) that can be electrically locked and unlocked to control access to a secure area. The illustrative method 70 includes establishing a wireless communication between one or more wireless access points and a mobile device, wherein the mobile device is associated with a user, as indicated at block 72. In some cases, the wireless access points may include one or more 5G millimeter-wave access points, and the wireless communication between the one or more wireless access points and each of the plurality of mobile devices may include sending and receiving one or more 5G millimeter-wave signals. In some cases, each of the one or more wireless access points may include an Ultra-Wide Band (UWB) access point, and the wireless communication between the one or more wireless access points and each of the plurality of mobile devices may include sending and receiving one or more Ultra-Wide Band (UWB) signals. In some cases, the wireless access points may include one or more 4G access points, and the wireless communication between the one or more wireless access points and each of the plurality of mobile devices may include sending and receiving one or more 4G signals. In some cases, the wireless access points may include one or more WiFi access points, and the wireless communication between the one or more wireless access points and each of the plurality of mobile devices may include sending and receiving one or more WiFi signals. In some cases, the wireless access points may include one or more Bluetooth access points, and the wireless communication between the one or more wireless access points and each of the plurality of mobile devices may include sending and receiving one or more Bluetooth signals. These are just examples.

One or more of the wireless access points wirelessly receive from the mobile device an International Mobile Equipment Identity (IMEI) based identifier that is unique to the mobile device and operates as a user credential for the user that is associated with the mobile device, as indicated at block 74. One or more of the wireless access points wirelessly identify a current location of mobile device, as indicated at block 76. A determination is made as to when the current location of the mobile device is within a predetermined proximity to the door, as indicated at block 78. A determination is made as to when the user associated with the mobile that has the received IMEI-based identifier has access rights to gain access through the door, as indicated at block 80.

Continuing on Figure 6B, the door is electrically unlocked when the current location of the mobile device is within the predetermined proximity to the door and the user associated with the mobile device that has the received IMEI-based identifier has access rights to gain access through the door, as indicated at block 82. How many people pass through the door while the door was electrically unlocked to allow the user associated with the mobile device that has the received IMEI-based identifier access through the door is monitored, as indicated at block 84. A tailgater alarm is issued when more than one person passed through the door while the door was electrically unlocked to allow the user associated with the mobile device that has the received IMEI-based identifier access through the door, as indicated at block 86.

In some instances, monitoring how many people pass through the door while the door was electrically unlocked to allow the user associated with the mobile device that has the received IMEI-based identifier access through the door may include monitoring an output of an ultrasonic sensor with a field of view that includes a region where people passing through the door must pass, and based on the output of the ultrasonic sensor, counting how many individual people passed through the door while the door was electrically unlocked to allow the user associated with the mobile device that has the received IMEI-based identifier access through the door

In some cases, monitoring how many people pass through the door while the door was electrically unlocked to allow the user associated with the mobile device that has the received IMEI-based identifier access through the door may include capturing a video stream of a region where people passing through the door must pass and then processing the video stream with video analytics to count how many individual people passed through the door while the door was electrically unlocked to allow the user associated with the mobile device that has the received IMEI-based identifier access through the door.

In some cases, monitoring how many people pass through the door while the door was electrically unlocked to allow the user associated with the mobile device that has the received IMEI-based identifier access through the door may include monitoring an output of a radar based sensor with a field of view that includes a region where people passing through the door must pass and based on the output of the radar based sensor, counting how many individual people passed through the door while the door was electrically unlocked to allow the user associated with the mobile device that has the received IMEI-based identifier access through the door. In some cases, the radar based sensor includes one or more transceivers, and a controller for processing incoming signals received as a result of electromagnetic radiation emitted from the one or more transceivers being reflected back to the one or more transceivers.

In some cases, monitoring how many people pass through the door while the door was electrically unlocked to allow the user associated with the mobile device that has the received IMEI-based identifier access through the door may include monitoring a beam break sensor that counts how many beam breaks and/or sequence of beam breaks that occurred while the door was electrically unlocked to allow the user associated with the mobile device that has the received IMEI-based identifier access through the door. In some cases, two or more beam break sensors may be spaced along a path where people passing through the door must pass. The number of beam breaks may be an indication of how many people passed through the door while the door was electrically unlocked to allow the user associated with the mobile device that has the received IMEI-based identifier access through the door. These sensors are just examples. Other sensors and/or combination of these and other sensors, may be used to determine how many people passed through the door while the door was electrically unlocked to allow the user associated with the mobile device that has the received IMEI-based identifier access through the door.

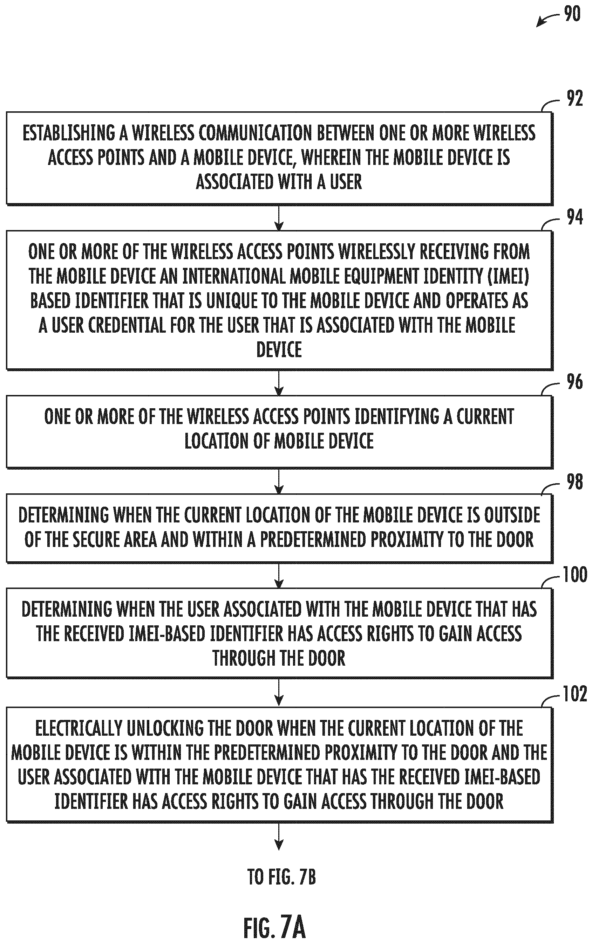

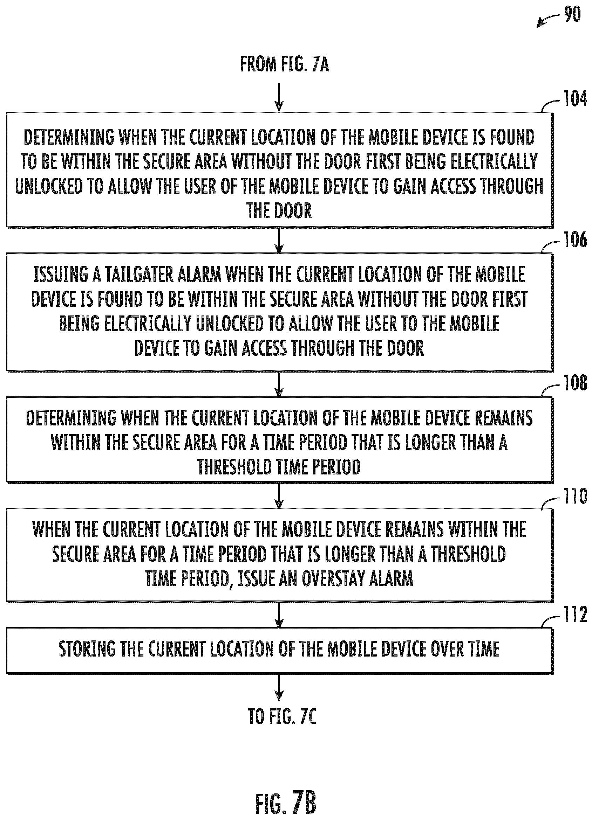

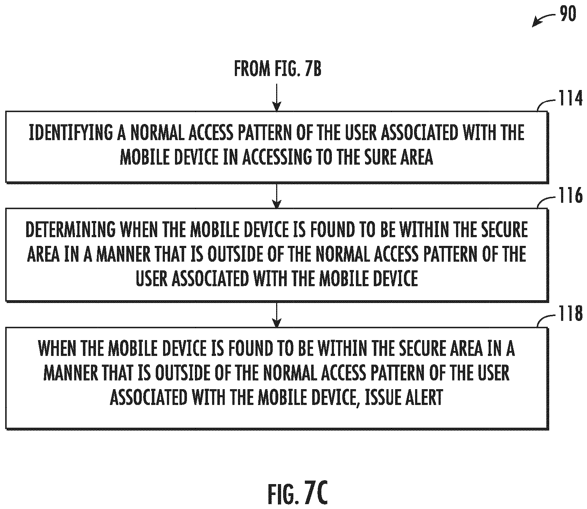

Figures 7A, 7B and 7C are flow diagrams that together show an illustrative method 90 of controlling access through a door (such as the door 12) of a facility having a door lock (such as the door lock 24) that can be electrically locked and unlocked to control access to a secure area. The illustrative method 90 includes establishing a wireless communication between one or more wireless access points and a mobile device, wherein the mobile device is associated with a user, as indicated at block 92. One or more of the wireless access points wirelessly receive from the mobile device an International Mobile Equipment Identity (IMEI) based identifier that is unique to the mobile device and operates as a user credential for the user that is associated with the mobile device, as indicated at block 94. One or more of the wireless access points identify a current location of mobile device, as indicated at block 96.

A determination is made as to when the current location of the mobile device is outside of the secure area and within a predetermined proximity to the door, as indicated at block 98. A determination is made as to when the user associated with the mobile device that has the received IMEI-based identifier has access rights to gain access through the door, as indicated at block 100. The door is electrically unlocked when the current location of the mobile device is within the predetermined proximity to the door and the user associated with the mobile device that has the received IMEI-based identifier has access rights to gain access through the door, as indicated at block 102.

Continuing on Figure 7B, a determination is made as to when the current location of the mobile device is found to be within the secure area without the door first being electrically unlocked to allow the user of the mobile device to gain access through the door, as indicated at block 104. This may occur when the user that has access rights to gain access through the door turns off his/her phone and enters the secure space as a tailgater, and then turns his/her phone back on later inside of the secure space. A tailgater alarm is issued when the current location of the mobile device is found to be within the secure area without the door first being electrically unlocked to allow the user of the mobile device to gain access through the door, as indicated at block 106.

Alternatively, or in addition, in some cases, the method 90 may include determining when the current location of the mobile device remains within the secure area for a time period that is longer than a threshold time period, as indicated at block 108. When the current location of the mobile device remains within the secure area for a time period that is longer than a threshold time period, an overstay alarm may be issued, as indicated at block 110.

Alternatively, or in addition, in some cases, the method 90 may include storing the current location of the mobile device over time, as indicated at block 112. Continuing on Figure 7C, the method 90 may include identifying a normal access pattern of the user associated with the mobile device in accessing the secure area, as indicated at block 114. A determination may be made as to when the mobile device is found to be within the secure area in a manner that is outside of the normal access pattern of that particular user associated with the mobile device, as indicated at block 116. When the mobile device is found to be within the secure area in a manner that is outside of the normal access pattern of the user associated with the mobile device, an alert may be issued as indicated at block 118.

Those skilled in the art will recognize that the present disclosure may be manifested in a variety of forms other than the specific embodiments described and contemplated herein. Accordingly, departure in form and detail may be made without departing from the scope and spirit of the present disclosure as described in the appended claims.

## Claims

1. A method of controlling access through a door of a facility having a door lock that can be electrically locked and unlocked to control access to a secure area, the method comprising:
establishing a wireless communication between one or more wireless access points and each of a plurality of mobile devices, wherein each of the plurality of mobile devices is associated with a particular user;
one or more of the wireless access points wirelessly receiving from each of the plurality of mobile devices a respective International Mobile Equipment Identity (IMEI) based identifier that is unique to the respective mobile device and operates as a user credential for the particular user that is associated with the respective mobile device;
one or more of the wireless access points wirelessly identifying a current location of each of the plurality of mobile devices;
determining when the current location of a first one of the plurality of mobile devices is outside of the secure area and within a predetermined proximity to the door;
determining when the particular user of the first one of the plurality of mobile devices has access rights to gain access through the door;
electrically unlocking the door when the current location of the first one of the plurality of the mobile devices is within the predetermined proximity to the door and the particular user that is associated with the first one of the plurality of mobile devices has access rights to gain access through the door;
determining that the particular user of a second one of the plurality of mobile devices does not have access rights to gain access through the door;
determining that the particular user of the second one of the plurality of mobile devices has improperly gained access through the door as a tailgater when the current location of the second one of the plurality of mobile devices is found to be within the secure area; and
issuing a tailgater alarm when the particular user of the second one of the plurality of mobile devices is determined to have improperly gained access through the door as a tailgater.

2. The method of claim 1, wherein identifying the current location of each of the plurality of mobile device by the one or more of the wireless access points comprises:
each of the plurality of mobile devices determined its own current location via a location service of the respective mobile device; and
each of the plurality of mobile devices sending their current location to one or more of the one or more wireless access points.

3. The method of claim **1,** wherein identifying the current location of each of the plurality of mobile device by the one or more of the wireless access points comprises:
receiving at one or more of the wireless access points wireless communication signals from each of the plurality of mobile devices; and
one or more of the wireless access points identifying the current location of each of the plurality of mobile device based at least in part on one or more characteristics of the wireless communication signals received from each of the plurality of mobile devices.

4. The method of claim 3, wherein two or more of the wireless access points wirelessly receiving wireless communication signals from each of the plurality of mobile devices, and wherein one or more of the wireless access points identify the current location of each of the plurality of mobile device based on a triangularization using the wireless communication signals that are wirelessly received by two or more of the wireless access points from each of the plurality of mobile devices.

5. The method of claim **1,** wherein each of the one or more wireless access points include a 5G millimeter-wave access point, and wherein the wireless communication between the one or more wireless access points and each of the plurality of mobile devices includes sending and receiving one or more 5G millimeter-wave signals.

6. The method of claim 1, wherein each of the one or more wireless access points include an Ultra-Wide Band (UWB) access point, and wherein the wireless communication between the one or more wireless access points and each of the plurality of mobile devices includes sending and receiving one or more Ultra-Wide Band (UWB) signals.

7. The method of claim 1, wherein each of the plurality of mobile devices includes an operating system (OS), wherein the OS of each of the plurality of mobile devices is configured to wirelessly send the IMEI-based identifier of the respective mobile device to one or more of the wireless access points without first being prompted by a third party application program that has been downloaded by a user to the respective mobile device.

8. The method of claim 1, wherein each of the plurality of mobile devices includes an operating system (OS), wherein the OS of each of the plurality of mobile devices is configured to identify the current location of the respective mobile device and to wirelessly send the current location of the respective mobile device to one or more of the wireless access points without first being prompted by a third party application program that has been downloaded by a user to the respective mobile device.

9. The method of claim 1, wherein each of the plurality of mobile devices hashing **an** IMEI number of the respective mobile device with a sim card serial number of the respective mobile device to form the IMEI-based identifier.

10. The method of claim 1, wherein each of the plurality of mobile devices hashing **an** IMEI number of the respective mobile device with a sim card serial number of the respective mobile device to arrive at a hashed value, and encrypting the hashed value to form the **IMEI-**based identifier.

11. The method of claim 1, wherein one or more of the wireless access points and/or one or more servers operatively coupled to the one or more wireless access points is/are configured to:
determine when the current location of the first one of the plurality of mobile devices is outside of the secure area and within a predetermined proximity to the door;
determine when the particular user of the first one of the plurality of mobile devices has access rights to gain access through the door;
electrically unlock the door when the current location of the first one of the plurality of the mobile devices is within the predetermined proximity to the door and the particular user that is associated with the first one of the plurality of mobile devices has access rights to gain access through the door;
determine that the particular user of the second one of the plurality of mobile devices does not have access rights to gain access through the door;
determine that the particular user of the second one of the plurality of mobile devices has improperly gained access through the door as a tailgater when the current location of the second one of the plurality of mobile devices is found to be within the secure area; and
issue the tailgater alarm when the particular user of the second one of the plurality of mobile devices is determined to have improperly gained access through the door as a tailgater.

12. A system for controlling access through a door of a facility to a secure area, the system comprising:
a door lock that can be electrically locked and unlocked to control access through the door;
a mobile device associated with a user, the mobile device having an International Mobile Equipment Identity (IMEI) based identifier that is unique to the mobile device;
one or more wireless access points for wirelessly receiving from the mobile device the International Mobile Equipment Identity (IMEI) that operates as a user credential for the user that is associated with the mobile device;
a controller operatively coupled to the door lock and the one or more wireless access points, the controller configured to:
identify a current location of mobile device based at least in part on wireless communication between one or more wireless access points and the mobile device;
determine when the current location of the mobile device is within a predetermined proximity to the door;
determine when the user associated with the mobile that has the received IMEI-
based identifier has access rights to gain access through the door; and electrically unlock the door when the current location of the mobile device is
within the predetermined proximity to the door and the user associated with the mobile device that has the received IMEI-based identifier has access rights to gain access through the door.

13. The system of claim 12, wherein the controller is configured to:
monitor how many people pass through the door while the door was electrically unlocked to allow the user associated with the mobile device that has the received IMEI-based identifier access through the door; and
issue a tailgater alarm when more than one person passed through the door while the door was electrically unlocked to allow the user associated with the mobile device that has the received IMEI-based identifier access through the door.

14. The system of claim 13, wherein monitoring how many people pass through the door while the door was electrically unlocked to allow the user associated with the mobile device that has the received IMEI-based identifier access through the door comprises:
the controller monitoring an output of a radar based sensor with a field of view that includes a region where people passing through the door must pass; and
based on the output of the radar based sensor, the controller counting how many individual people passed through the door while the door was electrically unlocked to allow the user associated with the mobile device that has the received IMEI-based identifier access through the door.

15. The method of claim 12, wherein monitoring how many people pass through the door while the door was electrically unlocked to allow the user associated with the mobile device that has the received IMEI-based identifier access through the door comprises:
the controller receiving a video stream of a region where people passing through the door must pass; and
the controller processing the video stream with video analytics to count how many individual people passed through the door while the door was electrically unlocked to allow the user associated with the mobile device that has the received IMEI-based identifier access through the door.
